# EUROPEAN PATENT SPECIFICATION

(11) **EP 1 128 260 B1**
(45) Date of publication and mention of the grant of the patent: **19.04.2006**
(21) Application number: 01301048.3
(22) Date of filing: 06.02.2001
(51) Int. Cl.: G06F 3/12

(54) **Printer to avoid unnecessary printing**
Drucker zur Vermeidung von unnötigem Drucken
Imprimant permettant d'éviter une impression inutile

(30) Priority: 21.02.2000 JP 2000043052; 31.03.2000 JP 2000100130; 17.11.2000 JP 2000350997
(43) Date of publication of application: 29.08.2001
(60) Divisional application: 06075097.3
(73) Proprietor: SEIKO EPSON CORPORATION, Shinjuku-ku Tokyo (JP)
(72) Inventor: Oyanagi, Makoto, c/o Seiko Epson Corporation, Suwa-shi, Nagano-ken 392-8502 (JP); Kumagai, Toshihiro, c/o Seiko Epson Corporation, Suwa-shi, Nagano-ken 392-8502 (JP)
(74) Representative: Sturt, Clifford Mark

(56) References cited:
- EP-A- 0 786 736
- EP-A- 0 853 284
- GB-A- 2 219 880
- US-A- 5 666 558
- PATENT ABSTRACTS OF JAPAN vol. 1998, no. 14, 31 December 1998 (1998-12-31) & JP 10 250195 A (CANON INC.), 22 September 1998 (1998-09-22)
- PATENT ABSTRACTS OF JAPAN vol. 2000, no. 2, 29 February 2000 (2000-02-29) & JP 11 305977 A (SEIKO EPSON CORP.), 5 November 1999 (1999-11-05)

## Description

### BACKGROUND OF THE INVENTION

### Field of the Invention

This invention relates to a printer to avoid an unnecessary printing even when a printer cable is removed during a printing operation.

### Description of the Related Art

A printer cable like a parallel cable and a USB (Universal Serial Bus) cable connects a printer and a computer. Then, via the printer cable, printing data and so on is transmitted from the computer to the printer, and status information and so on is transmitted from the printer to the computer.

When the printer cable like the parallel cable and the USB cable is removed during the printer's printing operation, the printing data is not transmitted from the computer to the printer, and the printing operation is stopped. Such as action as removing cable is made by intentionally, carelessly and so on. For example, the user removes the cable intentionally in the case where the computer connecting to this printer is changed to another one.

When the cable is removed during the printer's printing operation, the printing operation after the printer cable is removed is not done even if the printer cable is plugged again in the printer thereafter. Moreover, there is a possibility that the printing data transmitted before the printer cable is removed remains in a data buffer of the printer. In this case, there is a possibility that the printer prints meaninglessly. That is, a possibility of performing the so-called garbage printing remains.

In these cases, the user erases the printing data which remains in the data buffer by turning off a power switch of the printer or by operating a control panel of the printer in the conventional printer.

Recently, a printer having neither a power switch nor a control panel for reducing the costs appears on the market. For this printer, the user has to remove and plug again a power cable of the printer for erasing the printing data stored in the printer buffer. However, it is troublesome for the user to remove and plug again the power cable for erasing the printing data in the data buffer.

JP 10250195 discloses a printer including a power supply, a control section for controlling the power supply and a detector for detecting whether an interface cable is connected to the printer or not. The control section is capable of interrupting the power supply based on detection results from the detector.

### SUMMARY OF THE INVENTION

It is therefore an object of the invention to provide a printer which is configured not to perform an unnecessary printing operation when a printer cable, which connects a printer and a computer, is unplugged during a printing operation.

In order to accomplish the aforementioned and other objects, according to one aspect of the present invention, there is provided a printer comprising:
a detector configured to detect that a printer cable, which is connected to a computer, is unplugged;
a data buffer configured to temporarily store printing data received from the computer; and characterized by
a clearer configured to clear printing data stored in the data buffer when the detector detects that the printer cable has been unplugged.

According to another aspect of the invention, there is provided a computer program product for performing a printer control method, the method comprising:
a detecting step for detecting that a printer cable, which is connected to a computer, is unplugged; and characterized by
a clearing step for clearing printing data received from the computer and stored in a data buffer when it is detected that the printer cable has been unplugged in the detecting step.

### BRIEF DESCRIPTION OF THE DRAWINGS

Fig. 1 is a diagram showing a hardware configuration of a printing system according to an embodiment of the invention;
Fig. 2 is a diagram which illustrates a signal transmitting and receiving relationship between a computer and a printer in the printing system shown in Fig. 1 when a printing is normally performed;
Fig. 3 is a diagram which illustrates a signal transmitting and receiving relationship between the computer and the printer in a first embodiment of the invention when a printer cable is removed in a printer operation;
Fig. 4 is a diagram showing a flow chart for explaining a printing data receiving process in the printer according to the first embodiment of the invention;
Fig. 5 is a diagram showing a flow chart for explaining a printing data receiving process according to a second embodiment of the invention;
Fig. 6 is a diagram showing a flow chart for explaining a printing data receiving process according to a third embodiment of the invention;
Fig. 7 is a diagram showing a logical channel structure established between the printer and the computer according to a fourth embodiment of the invention;
Fig. 8 is a timing chart for explaining packets transmitted and received in a control channel and a printing data transferring channel, which are established between the printer and the computer, and a status of an observation effective flag according to the fourth embodiment of the invention;
Fig. 9 is a timing chart for explaining packets transmitted and received in a control channel and a printing data transferring channel, which are established between the printer and the computer, and a status of a packet receiving flag according to the fourth embodiment of the invention;
Fig. 10 is a diagram for explaining signals transmitted and received between the printer and the computer according to the fourth embodiment of the invention;
Fig 11 is a diagram showing a flow chart for explaining a printing data transmitting process, which is executed by the computer according to the fourth embodiment of the invention;
Fig. 12 is a diagram showing a flow chart for explaining a receiving process, which is executed by the printer according to the fourth embodiment of the invention;
Fig. 13 is a diagram showing a flow chart for explaining a removing and plugging detecting process and a reset process according to the fourth embodiment of the invention; and
Fig. 14 is a diagram showing a flow chart for explaining a removing and plugging detecting process and a reset process according to the fifth embodiment of the invention.

### DETAILED DESCRIPTION OF THE PREFERRED EMBODIMENTS

### (First Embodiment)

According to the first embodiment of the invention, in a printing system in which a parallel cable connects a printer and a computer, the printer is configured to erase printing data in a data buffer thereof when the parallel cable is removed and then plugged again during printing operation. More detailed explanation is made below.

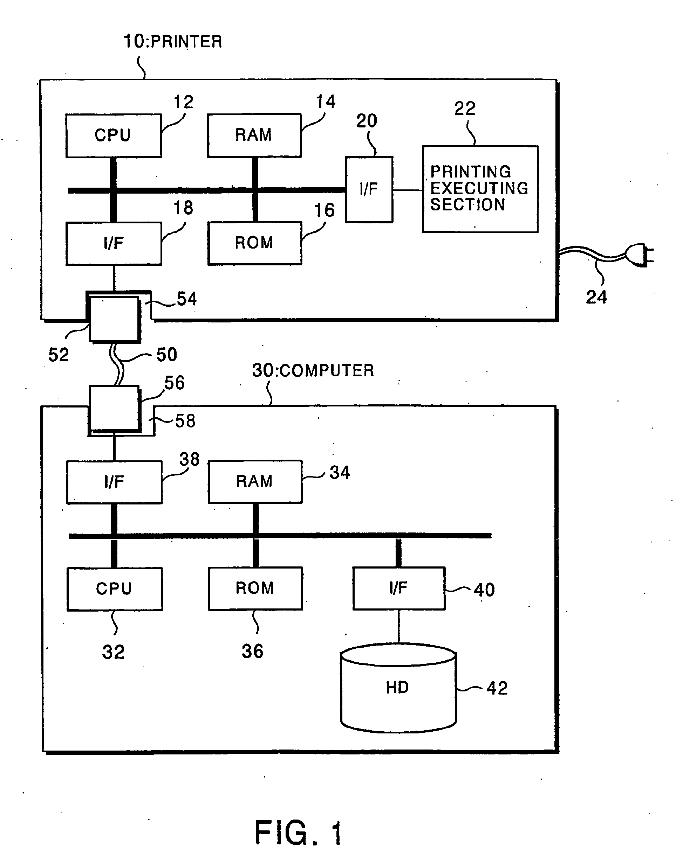

Fig. 1 is a diagram showing a hardware configuration of a printing system according to an embodiment of the invention. As shown in Fig. 1, the printing system according to the embodiment of the invention has a printer 10 and a computer 30.

The printer 10 has a CPU 12, a RAM 14, a ROM 16 and interfaces 18 and 20, and they are connected to each other via an internal bus. Furthermore, the internal bus is connected to a printing executing section 22 via the interface 20. In this embodiment, the printer 10 is an ink jet printer, and a printing is performed in the printing executing section 22 by driving an ink head. In addition, the printer 10 has a power cord 24, and an electric power is supplied to the printer 10 by plugging the power cord 24 in a receptacle. However, the printer 10 does not have a power switch and does not have a control panel.

The computer 30 has a CPU 32, a RAM 34, a ROM 36 and interfaces 38 and 40, and they are connected to each other via an internal bus. Furthermore, the internal bus is connected to a hard disk 42 via the interface 40.

A printer cable 50 connects the printer 10 and the computer 30. In this embodiment, the printer cable 50 is a parallel cable in conformity with the IEEE 1284.4 standard. At one end of the printer cable 50, a connecter 52 is provided, which is inserted into a connecting portion 54 of the printer 10. At the other end of the printer cable 50, a connector 56 is provided, which is inserted into a connecting portion 58 of the computer 30. A user can arbitrarily insert the connectors 52, 56 of the printer cable into the connecting portions 54, 58 and remove them therefrom. The connecting portion 54 of the printer 10 is connected to the interface 18, and the connecting portion 58 of the computer 30 is connected to the interface 38.

Next, an explanation is made about an example of the printing operation according to the printing system shown in Fig. 1. For example, printing data stored in the hard disk 42 of the computer 30 is transmitted from the connecting portion 58 to the printer cable 50 via the interface 38. The printing data transmitted to the printer cable 50 is stored in RAM 14 of the printer 10 via the connecting portion 54 and the interface 18. That is, at least a portion of the RAM 14 constitutes a data buffer for the printing data according to this embodiment.

The printer 10 performs a necessary data conversion to the printing data stored in the RAM 14, and print it in the printing executing section 22. In more detail, the CPU 12 reads out a print process program stored in the ROM 16, and executes it. When the print process program is executed, a language interpretation is performed on the printing data stored in the RAM14, and the printing data is changed into data which can be printed in the printing executing section 22. Then, the CPU 12 transmits the converted data to the printing executing section 22, and the printing executing section 22 performs the printing. The data for which printing is finished is sequentially erased in the RAM 14.

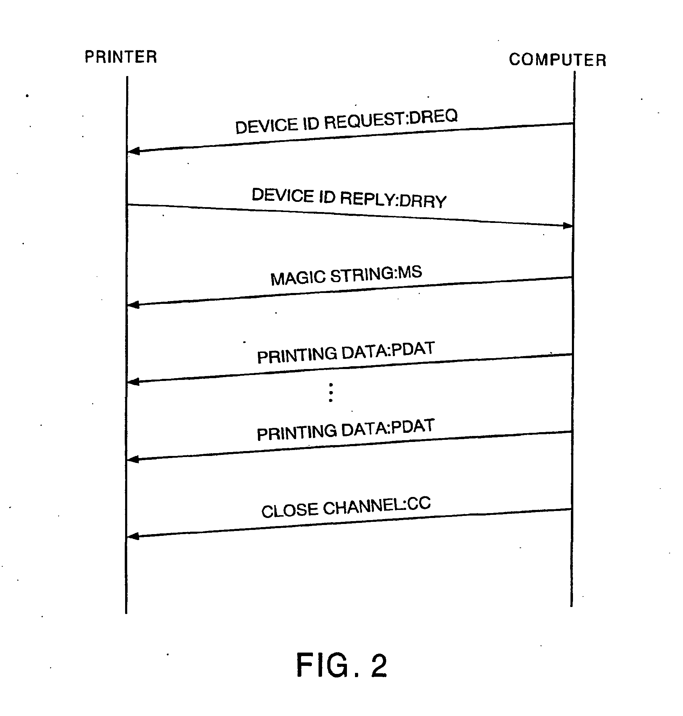

Fig. 2 is a signal chart for explaining the transmitting and the receiving of signals between the printer 10 and the computer 30 in a normal printing.

As shown in Fig. 2, the computer 30 transmits a device ID request DREQ to the printer 10 before starting the printing. In response to the device ID request DREQ, the printer 10 transmits a device ID reply DRPY to the computer 30. The device ID request DREQ is a signal which is transmitted by the computer 30 so that the computer 30 confirms models of the printer 10 and others. In this embodiment, the computer 30 is designed to transmit the device ID request DREQ to the printer 10 before the printing starts.

After that, the computer 30 transmits a magic string MS to the printer 10. This magic string MS is transmitted to inform the printer 10 that the computer 30 sends printing data PDAT after this. Then, the computer 30 transmits the printing data PDAT to the printer 10. When the computer 30 has finished transmitting all the printing data PDAT necessary for the printing, the computer 30 transmits a close channel CC to the printer. When the close channel CC is received in the printer 10, the printer 10 is able to confirm that all the printing data PDAT has been received.

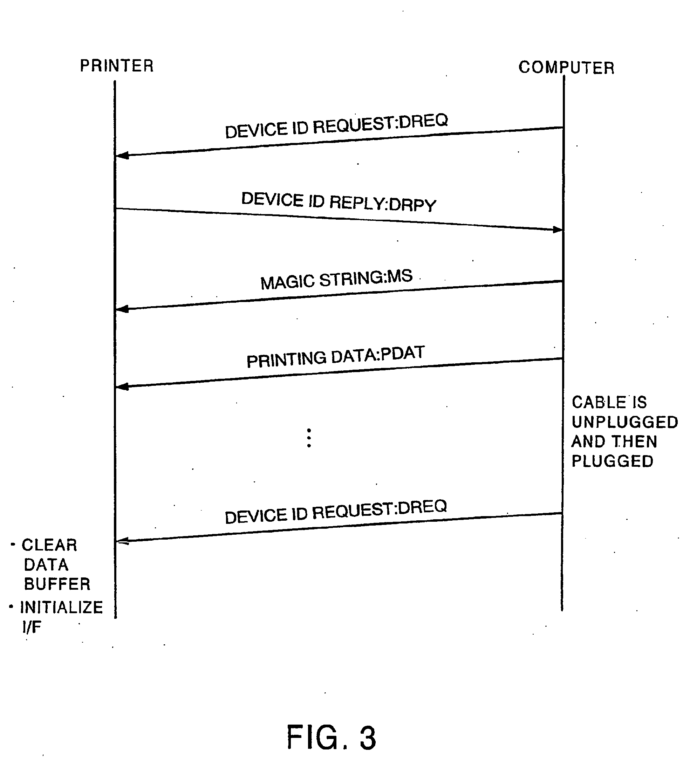

Fig. 3 is a signal chart for explaining the transmitting and the receiving of signals between the printer 10 and the computer 30 when the printer cable 50 is removed during a printing operation.

As shown in Fig. 3, the computer 30 sends a device ID request DREQ to the printer 10 before it starts printing. The printer 10 replies a device ID reply DRPY to the computer 30 in accordance with the device ID request.

Next, the computer 30 sends a magic string MS. Then, the computer 30 starts sending printing data PDAT. In one example of Fig. 3, it is assumed that the printer cable 50 is removed from the printer 10 or the computer 30 by any reason or any cause. After that, it is assumed that the printer cable 50 is plugged into the printer 10 or the computer 30. In this case, another computer, which is different from the computer 30, may be connected to the printer 10. In such a case, there is a possibility that a part of the printing data PDAT, which is received until the printer cable 50 is removed, remains in the data buffer of the printer 10.

When the user tries to print next, as mentioned above, the computer 30 transmits a device ID request DREQ to the printer 10. That is, in this embodiment, the computer 30 is designed to send the device ID request DREQ to the printer 10. Therefore, The printer 10, which receives the device ID request DREQ, is able to judge that the printing data PDAT stored in the RAM 14 is unnecessary. As a result, the printer 10 erases the remaining printing data PDAT in the RAM 14. Furthermore, the printer 10 makes a necessary initial setting of the interface and the like.

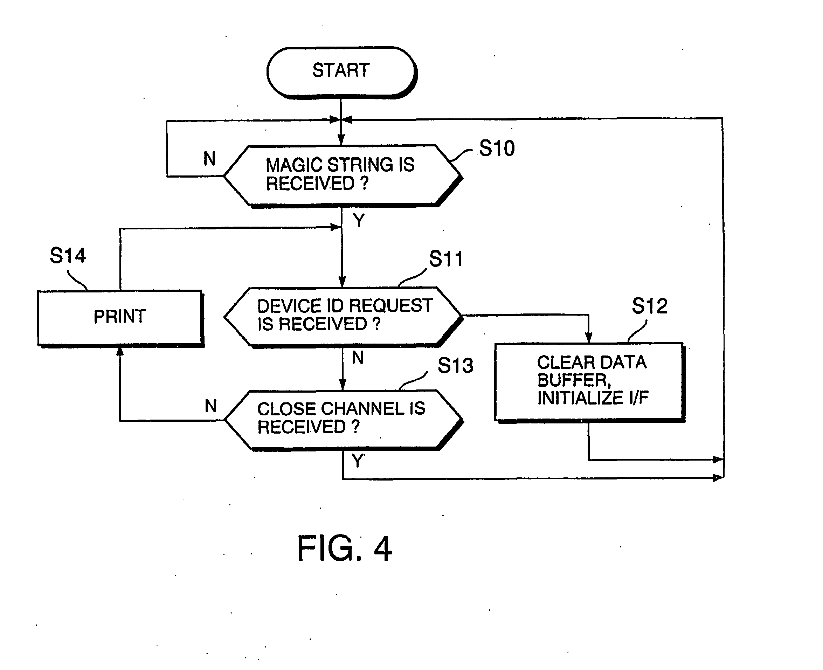

Next, referring to Fig. 4, a printing data receiving processing of the printer 10 is explained in detail. Fig. 4 is a flow chart for explaining the printing data receiving processing.

A program for the printing data receiving processing is stored in the ROM 16 of the printer 10. The power is supplied to the printer 10, and the CPU 12 reads out and runs this program so that the printing data receiving processing is performed.

First, as shown in Fig. 4, the printer 10 judges whether a magic string MS has been received (step S10). When the magic string MS has not yet been received (step S10: No), the printer 10 is waiting by repeating step 10. Not receiving the magic string MS means that printing does not start.

When the printer 10 receives the magic string MS (step S10: Yes), the printer 10 judges whether a device ID request DREQ has been received (step S11). Receiving the magic string MS means that printing does start. Therefore, it is possible for the printer 10, which receives the device ID request DREQ, to presume on the basis of receiving the device ID request that a new print starts again after the printer cable is unplugged once in printing and then plugged again. Therefore, when the printer 10 receives the device ID request DREQ (step S11: Yes), the printer 10 clears the rest of the printing data PDAT in the RAM 14 which is the data buffer, ejects paper which is stopped in partway for printing, and initializes the interface (step S12).

When the printer 10 does not receive the device ID request DREQ (step S11: No), the printer 10 judges whether a close channel CC has been received (step S13). When the printer 10 does not receive the close channel CC (step S13: No), it means that the printing operation is under way so that the printer 10 does print (step S14). Then, it repeats the process from step S11 explained above.

On the other hand, when the printer 10 receives the close channel CC (step S13: Yes), it means that the printing has finished so that the printer 10 repeats the process from step S10 explained above.

As explained above, the printing system according to this embodiment can avoid an unnecessary print when the printer cable 50 is unplugged under printing, even if the printer cable 50 is a parallel cable that is not able to directly detect it unplugging. In more detail, when the printer cable 50 is removed while the printer 10 is printing, the user inserts the printer cable 50 into the printer 10 again, and begins to newly print after a lapse of a predetermined time. At the beginning of the print, in this embodiment, the printing system has an arrangement that the device ID request DREQ is transmitted from the computer 30 to the printer 10. Therefore, in this embodiment, when the printer 10 receives the device ID request DREQ which means starting a print before receiving the close channel CC which means ending a print, the printer 10 presumes that the printer cable 50 is unplugged once and then plugged once more and clears the rest of the printing data PDAT in the RAM 14. As a result, it prevents the printer 10 from printing the unnecessary printing data PDAT remaining in the RAM 14 and performing meaningless printing.

In addition, in the printer 10 which has neither a power switch nor a control panel, the rest of the printing data PDAT remaining in the RAM 14 can be cleared without unplugging and plugging the power cord 24. Therefore, the ease-of-use of the printer 10 can be improved.

### (Second Embodiment)

According to the second embodiment of the invention, in a printing system which has a USB cable connecting a printer and a computer, when the USB cable is unplugged from the printer during a printing operation and then plugged into the printer, the printer erases the printing data in a data buffer. More detailed explanation is made below.

The hardware configuration of the printing system according to the second embodiment of the invention is similar to the printing system shown in Fig. 1, but the printer cable 50, which connects the printer 10 and the computer 30, is a USB cable. This point is different from the first embodiment.

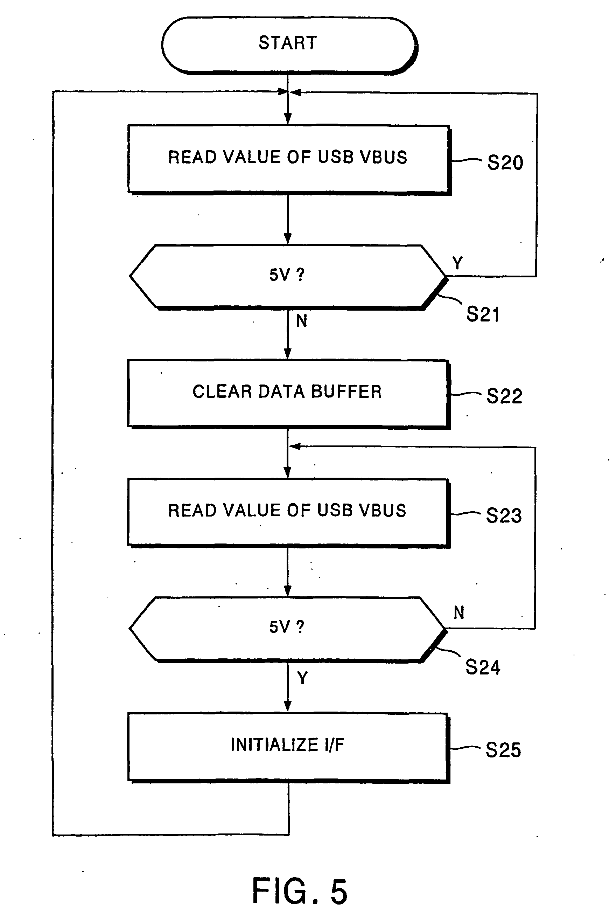

Referring to Fig. 5, a printing data receiving processing of the printer 10 is explained in detail. Fig. 5 is a flow chart for explaining the printing data receiving processing of the printer 10.

A program for the printing data receiving processing is stored in the ROM 16 of the printer 10. The power is supplied to the printer 10, and the CPU 12 reads out and runs this program so that the printing data receiving processing is performed.

First as shown in Fig. 5, the printer 10 reads a voltage on a VBUS (a power source bus) of the USB (step S20). Concerning the USB cable, when the printer cable 50 is connected normally, the VBUS of the printer cable 50 is supplied with 5V. Therefore, the printer 10 can judge whether the printer cable 50 is connected normally by detecting the voltage of the VBUS and whether it is approximately 5V or approximately 0V.

Hence, the printer 10 judges whether the voltage is approximately 5V (step S21). When the voltage has been about 5V (step S21: Yes), the process of the above-mentioned step S20 is repeated since the printer cable 50 is connected properly. On the other hand, when the voltage has not been about 5V (step S21: No), for instance, when the voltage has dropped about 0V, the printer 10 clears the RAM 14 which is the data buffer since the printer cable 50 is removed.

Subsequently, the printer 10 reads again a voltage on the VBUS of the USB cable (step S23). Then, the printer 10 judges whether the voltage has been about 5V (step S24). When the voltage of the VBUS has not been about 5V (step S24: No), the process of the above-mentioned steps S23 and S24 are repeated for waiting. On the other hand, when the voltage has been about 5V (step S24: Yes), the printer 10 initializes the interface and so on for next printing since the printer cable 50 is reinserted. Then, the printer 10 repeats the process from the above-mentioned step S20.

As explained above, according to the printing system of this embodiment, the printer 10 detects the USB cable unplugged by the observation of the voltage on the VBUS, and the printer 10 clears the RAM 14 being the data buffer of the printer 10 when the USB cable is plugged. Therefore, it prevents the printer 10 from printing the unnecessary printing data PDAT remaining in the RAM 14 and performing meaningless printing.

In addition, as in the case of the above-mentioned first embodiment, in the printer 10 which has neither a power switch nor a control panel, the printing data PDAT can be cleared without unplugging and plugging the power cord 24. Therefore, the ease-of-use of the printer 10 can be improved.

### (Third Embodiment)

In the above-mentioned second embodiment, the printer 10 is designed to clear the data buffer of the RAM 14 when the USB cable is removed regardless of whether the printer 10 is in the process of printing. In contrast with this, in the third embodiment of the invention, the printer 10 is designed to clear the data buffer of the RAM 14 only when the USB cable is removed while the printer 10 is in the process of printing. More detailed explanation is made below.

A hardware configuration of the printing system according to the third embodiment of the invention is similar to the above-mentioned second embodiment. That is, in the printing system shown in Fig. 1, the printer cable 50 connecting the printer 10 and the computer 30 is the USB cable.

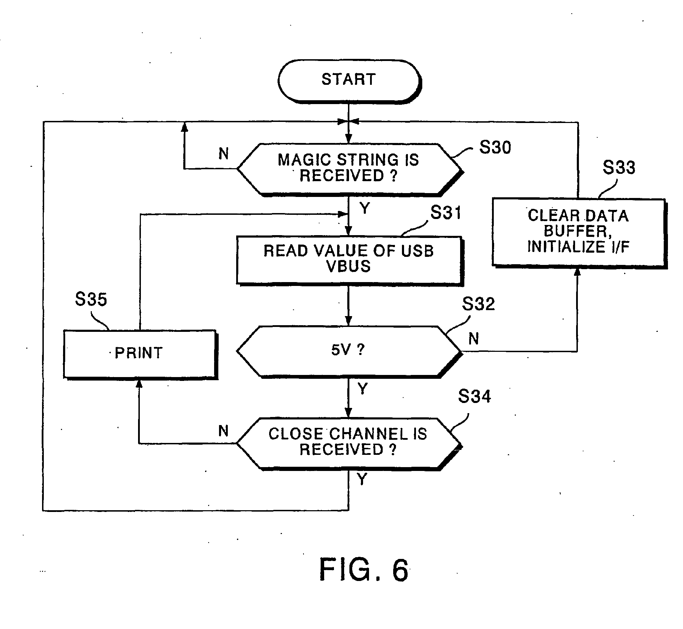

Referring to Fig. 6, a printing data receiving processing of the printer 10 is explained in detail. Fig. 6 is a flow chart for explaining the printing data receiving processing of the printer 10.

A program for the printing data receiving processing is stored in the ROM 16 of the printer 10. The power is supplied to the printer 10, and the CPU 12 reads out and runs this program so that the printing data receiving processing is performed.

First, as shown in Fig. 6, the printer 10 judges whether a magic string MS has been received from the computer 30 (step S30). When the magic string MS has not yet been received (step S30: No), the printer 10 is waiting by repeating step 30 since the computer 30 does not start to transmit the printing data PDAT.

On the other hand, when the printer 10 receives the magic string MS (step S30: Yes), the printer 10 acquires a voltage of the VBUS of the USB (step S31) since it means that the computer 30 starts to transmit the printing data PDAT. Subsequently, the printer 10 judges whether the voltage is approximately 5V (step S32).

When the voltage has not been approximately 5V (step S32: No), for instance, when the voltage has been dropped to about 0V, it means removing the printer cable 50 being USB so that the printer 10 clears the data buffer of the RAM 14 and initializes the interface (step S33). Then the printer 10 returns to the above-mentioned step 30.

On the other hand, when the voltage has been approximately 5V (step S32: Yes), it means the transmission of the printing data PDAT is started, so that the printer 10 judges whether the close channel CC is received (step S34). When the close channel CC has not been received (step S34 : No), it means the transmission of the printing data PDAT is continued, so that the printer 10 continues to print (step S35). Then, the process from the above-mentioned step S31 is repeated.

On the other hand, when the close channel CC has been received (step S34: Yes), it means that the computer 30 has finished sending the printing data PDAT so that the process from the above-mentioned step S30 is repeated.

As explained above, according to the printing system of this embodiment, as in the case of the above-mentioned second embodiment, the printer 10 detects the USB cable unplugged by the observation of the voltage on the VBUS, and the printer 10 clears the RAM 14 being the data buffer of the printer 10 when the USB cable is unplugged. Therefore, it prevents the printer 10 from printing the unnecessary printing data PDAT remaining in the RAM 14 and performing meaningless printing.

Moreover, in the printer 10 according to this embodiment, the printer 10 erases the printing data PDAT remaining in the data buffer of the RAM 14 only when the printer cable 50 being the USB is unplugged during a printing operation. Therefore, the printer 10 can prevent the possibility that data stored in the RAM 14 is erased carelessly.

In addition, as in the cases of the above-mentioned first and second embodiments, in the printer 10 which has neither a power switch nor a control panel, the printing data PDAT can be cleared without unplugging and plugging again the power cord 24. Therefore, the ease-of-use of the printer 10 can be improved.

### (Fourth Embodiment)

According to the fourth embodiment of the invention, a printing system uses a technique of detecting the plugging and unplugging of the printer cable 50, which is different from the first embodiment. That is, the technique of detecting the plugging and unplugging is modified in the case of using the printer cable 50 which is a type that the plugging and unplugging of the cable can not be physically detected. More detailed explanation is made below.

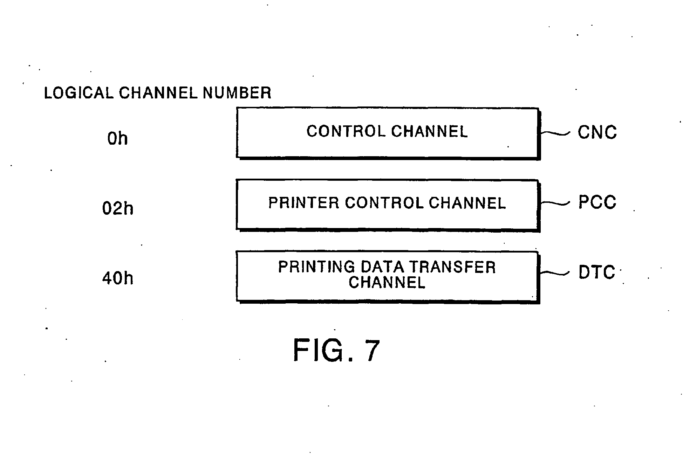

First, in accordance with Fig. 7, a configuration of logical channels formed between the printer 10 and the computer 30 for communication is explained. Fig. 7 is a schematic diagram for explaining the logical channel formed on a communication line.

As shown in Fig. 7, a control channel CNC, a printer control channel PCC and a printing data transfer channel DTC are formed between the printer 10 and computer 30 as the logical channels. The control channel CNC is for opening and/or closing the logical channel, and for transmitting information of the number of sent packets and the like. The printer control channel PCC is for confirming the amount of remaining inks, transmitting a instruction of a ink change and the like. The printing data transfer channel DTC is for transmitting the printing data from the computer 30 to the printer 10.

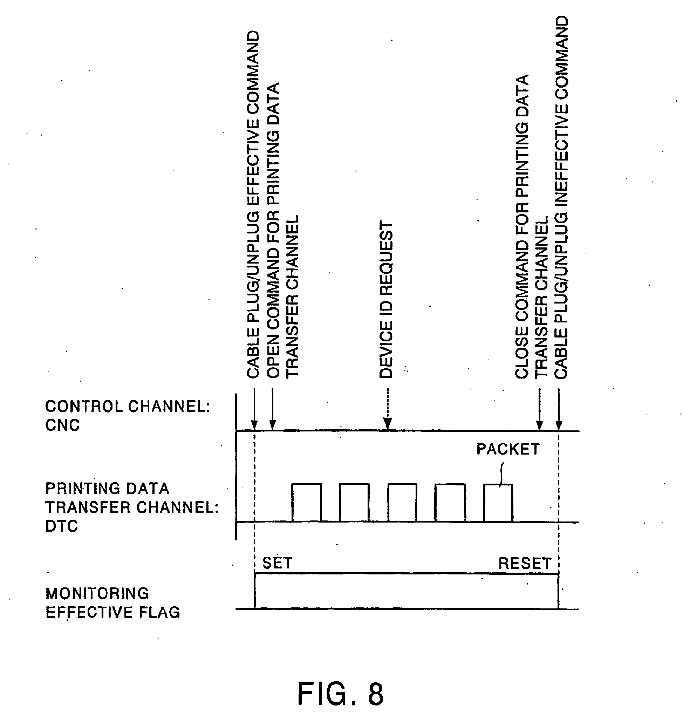

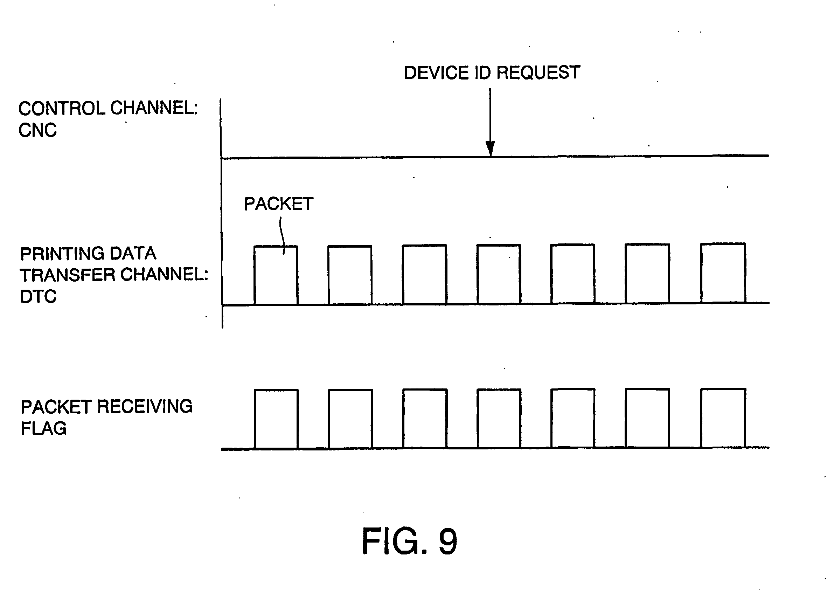

In this embodiment, erasing the printing data PDAT stored in the RAM 14 is performed with the combined use of two techniques. Fig. 8 is a diagram for explaining one technique and Fig. 9 is a diagram for explaining the other technique. Firs t, one technique is explained in accordance with Fig. 8.

Fig. 8 is a timing chart in the case where a printing is performed using the control channel CNC and the printing data transfer channel DTC. As shown in Fig. 8, the computer 30 transmits a cable plug/unplug effective command to the printer 10 by using the control channel CNC. Having received this command, the printer 10 sets a monitoring effective flag. Next, the computer 30 transmits an open command for the printing data transfer channel DTC to the printer 10 by using the control channel CNC. As a result, the printing data transfer channel DTC between the printer 10 and computer 30 is opened.

Subsequently, the computer 30 transmits packets, which are formed by dividing the printing data, to the printer 10 by using the printing data transfer channel DTC. The printer 10, which received these packets, forms the printing data by restructuring these packets and performs a printing on the basis of the printing data.

Having finished sending all the packets for the printing data, the computer 30 transmits a close command for the printing data transfer channel DTC by using the control channel CNC. As aresult, the printing data transfer channel DTC between the printer 10 and computer 30 is closed. Then, the computer 30 transmits a cable plug/unplug ineffective command to the printer 10 by using the control channel CNC. Having received this command, the printer 10 resets the monitoring effective flag.

However, in the case where the printer cable 50 is unplugged from the printer 10 during a printing operation and plugged again into the printer 10, the printer 10 receives a device ID request before the printer 10 receives the cable plug/unplug ineffective command. The reason for this is that, the computer 30 is designed to transmit a device ID request to the printer 10 when a user plugs the printer cable 50 again and restarts printing. That is, detecting the device ID request while the monitoring effective flag is set means that a printing data is to be sent again. Therefore, the printer 10 can detect that the printer cable 50 was unplugged and then plugged again.

Next, referring to Fig. 9, the other technique is explained. Fig. 9 is a timing chart in the case where printing data is transmitted by using the printing data transfer channel DTC. As shown in Fig. 9, the computer 30 transmits packets of the printing data to the printer 10 by using the printing data transfer channel DTC. In the printer 10, a packet receiving flag is set only while a packet is being received. That is, the flag is not set/reset in synchronism with open/close of the printing data transfer channel DTC, but in synchronism with the receiving/non-receiving of packet. When the device ID request is received during setting the packet receiving flag, the printer 10 is able to judge that the printer cable 50 is removed and inserted.

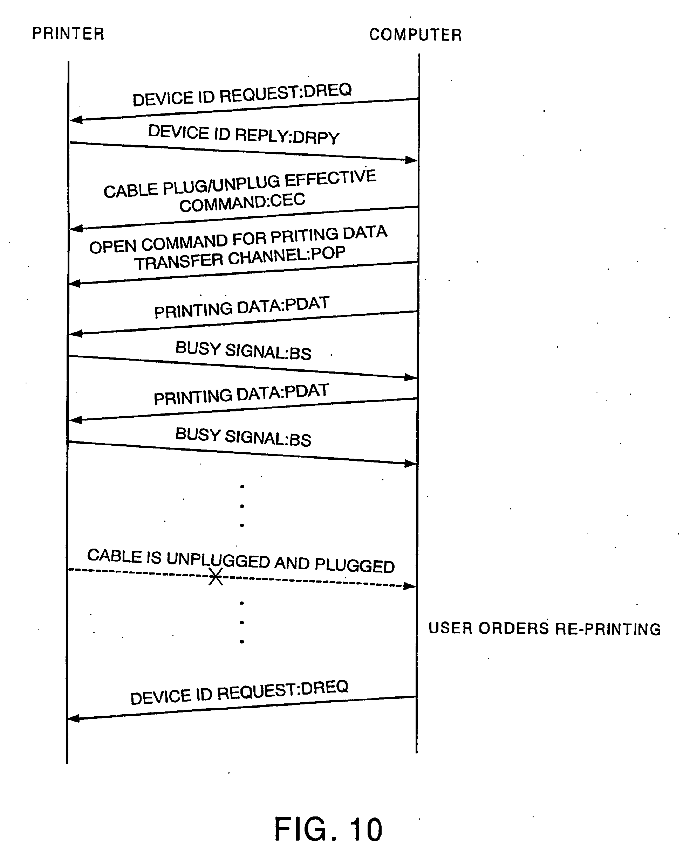

Next, referring to Fig. 10, the transmitting and receiving of signals between the printer 10 and computer 30 in the case where the printer cable 50 is unplugged in partway for a printing operation and plugged again.

As shown in Fig. 10, first, the computer 30 sends a device ID request DREQ to the printer 10. The printer 10, which receives the device ID request DREQ, sends a device ID reply DRPY to the computer 30.

Next, the computer 30 sends a cable plug/unplug effective command CEC to the printer 10. Subsequently, the computer 30 sends an open command POP for the printing data transfer channel DTC to the printer 10.

Next, the computer 30 sends printing data PDAT to the printer 10 packet by packet. The printer 10, which receives the packets, sends a busy signal BS to the computer 30 every time a packet is received. In this way, the printing data PDAT is sent from the computer 30 to the printer 10 while a transmission and reception of data is checked. The printer 10 generates image data on the basis of the received data PDAT and performs printing in the printing executing section 22.

In the case where the printer cable 50 is removed due to user's error and the like, the communication line is disconnected in partway for a printing operation. Then, when it is recovered, the computer 30 is in a state of waiting for the busy signal BS being a response from the printer 10, and the printer 10 is in a state of waiting for the printing data PDAT from the computer 30. Furthermore, when the user gives instructions for a printing to the computer 30 again, the computer 30 transmits a device ID request DREQ to the printer 10.

However, for the printer 10, the printing data transfer channel DTC has already been open and the monitoring effective flag has already been set, so that the printer 10 is in a state of waiting for the printing data PDAT. Therefore, receiving the device ID request DREQ again means that the printer cable 50 has been removed and inserted again in a printing operation. Hence, the printer 10 clears the printing data PDAT remaining in the RAM 14, which is a data buffer, ejects printing paper which is stopped in partway for a printing operaion, and resets itself to return an initial state.

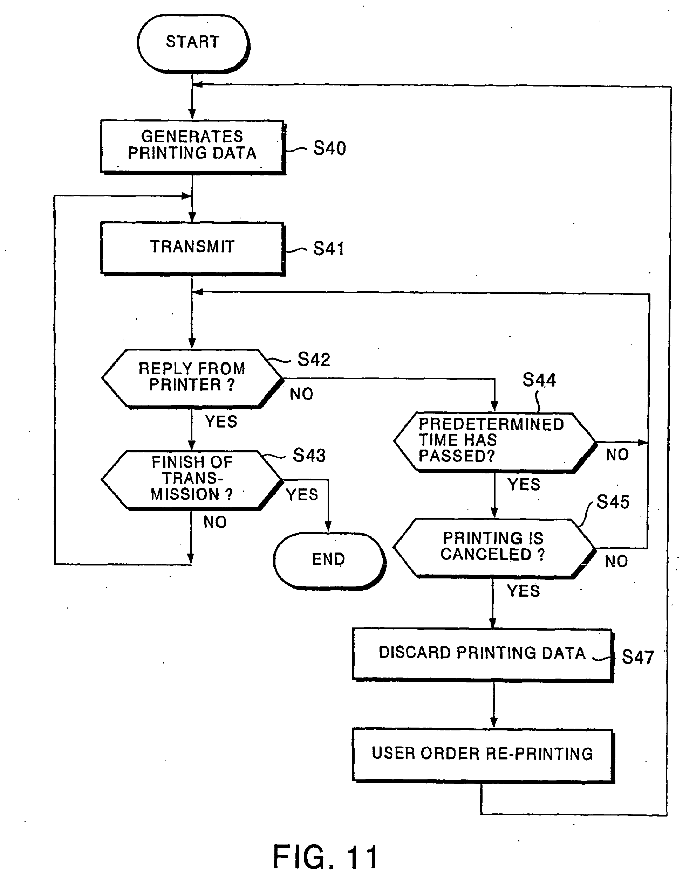

Next, referring to Fig. 11, a processing of the computer 30 according to this embodiment is explained. Fig. 11 is a flow chart for explaining a printing data transfer processing of the host computer 30. For example, first, a user gives instructions for a printing to the computer 30 by using an application program for making documents, and the computer 30 generates a printing data PDAT in accordance with data inputted from the application program (step S40). Subsequently, the computer 30 generates packets in accordance with the printing data PDAT and transmits one of the packets to the printer 10 (step S41).

Next, the computer 30 judges whether a busy signal BS is received from the printer 10 (step S42). When the computer 30 has received the busy signal BS (step S42: Yes), the computer 30 judges whether all the packets generated from the printing data PDAT have been transmitted (step S43). When all the packets generated from the printing data PDAT have been transmitted (step S43 : Yes), this processing is ended. On the other hand, all the packets have not yet been transmitted (step S43 : No), the computer 30 returns to step S41 mentioned above and repeats the transmission of the packets.

On the other hand, in the case where the printer cable 50 is unplugged and plugged, since the busy signal BS does not return from the printer 10, the computer 30 decides "No" in the above-mentioned step S42. Therefore, the computer 30 judges whether a predetermined time (for example, 20 seconds) has passed since the response from the printer 10 disconnected (step S44). When the predetermined time has not passed yet (step S44: No), the computer 30 returns to step S42 and monitors whether a response is received from the printer 10.

On the other hand, when the computer 30 has not received the busy signal BS from the printer 10 even if the predetermined time has passed (step S44: Yes), the computer 30 asks the user whether the printing should be cancelled or retried (step S45). When the user has canceled the print ing (step S45: Yes), the computer 30 discards the printing data (step S46). After that, the user provides the computer 30 with instructions for printing the same document as the last time or printing a document different from the last time (step S47). Then, the computer 30 returns to the above-mentioned step S40, generates the printing data again (step S40), and repeats the processing described above.

On the other hand, in step S45, when the user has chosen the retry for printing (step S45: No), the computer 30 returns to step S42 and waits for only the predetermined time for the busy signal BS from the printer 10.

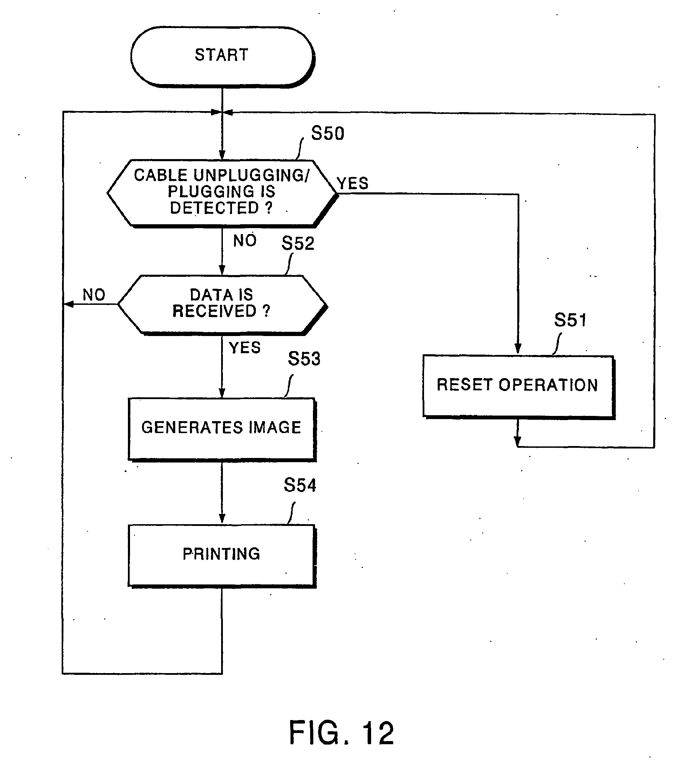

Next referring to Fig. 12, a processing of the printer 10 according to this embodiment is explained. Fig. 12 is a flow chart for explaining a receiving processing of the printer 10.

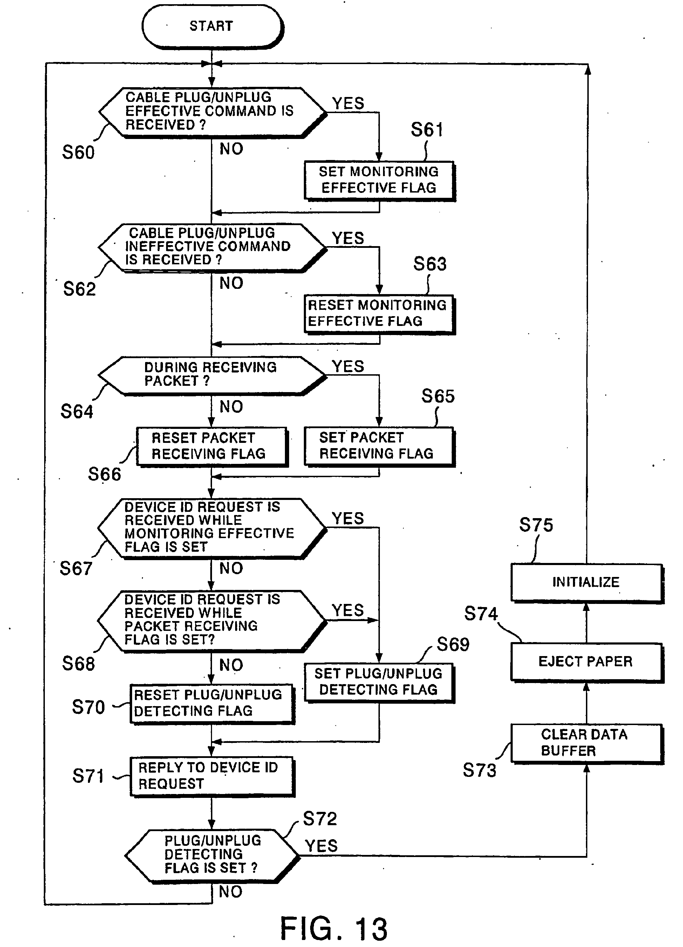

As shown in Fig. 12, the printer 10 judges whether unplugging and plugging the printer cable 50 is detected (step S50). When unplugging and plugging the printer cable 50 has been detected (step S50: Yes), the printer 10 clears the remaining printing data PDAT stored in the RAM 14, and ejects the paper in the course of the printing operation by a reset operation (step S51). By the way, step S50 for judging cable plugging/unplugging and step S51 for the reset operation are explained with reference to Fig. 13 later.

On the other hand, when unplugging and plugging the printer cable 50 has not been detected (step S50: No), the printer 10 judges whether the printing data PDAT are received from the computer 30 (step S52). When the printing data PDAT has not been received (step S52: No), the processing from step S50 is repeated.

On the other hand, when the printing data PDAT has been received from the computer 30 (step S52: Yes), the printer 10 generates image data on the basis of the printing data PDAT (step S53) and performs printing (step S54). Then, the processing from step S50 is repeated.

Next referring to Fig. 13, the unplugging/plugging detecting process in step 50 of Fig. 12 and the reset process in step S51 are explained in detail. Fig. 13 is a flow chart for explaining the unplugging/plugging detecting process and the reset process in detail.

As shown in Fig. 13, first, the printer 10 judges whether the cable plug/unplug effective command is received (step S60). When the cable plug/unplug effective command has been received (step S60: Yes), the monitoring effective flag is set (step S61).

After the monitoring effective flag is set in step S61, or when the cable plug/unplug effective command has not been received (step S60: No), the printer 10 judges whether the cable plug/unplug ineffective command is received (step S62). When the cable plug/unplug ineffective command has been received (step S62: Yes), the monitoring effective flag is reset (step S63).

After the monitoring effective flag is reset in step S63, or when the cable plug/unplug ineffective command has not been received (step S62: No), the printer 10 judges whether the printer 10 is receiving any packet in the control channel CNC, printer control channel PCC or printing data transfer channel DTC (step S64). When the printer 10 is receiving the packet (step S64: Yes), the packet receiving flag is set (step S65), whereas when the printer 10 is not receiving the packet (step S64: No), the packet receiving flag is reset (step S66). A preparation for monitoring the plugging/unplugging of the cable is finished by the above-explained steps.

Next, the printer 10 judges whether a device ID request DREQ is received in a state that the monitoring effective flag is set (step S67). When the device ID request DREQ has not been received in a state that the monitoring effective flag is set (step S67: No), the printer 10 judges whether the device ID request DREQ is received in a state that the packet receiving flag is set (step S68).

When the device ID request DREQ has been received in a state that the monitoring effective flag is set (step S67: Yes), or when the device ID request DREQ has been received in a state that the packet receiving flag is set (step S68: Yes), a plug/unplug detecting flag, which indicates whether the printer cable 50 is unplugged and plugged, is set (step S69). On the other hand, when the device ID request DREQ has not been received in a state that the monitoring effective flag is set (step S67: No), and when the device ID request DREQ has been received in a state that the packet receiving flag is set (step S68: No), the plug/unplug detecting flag is reset (step S70).

Next, the printer 10 transmits a device ID reply to the computer 30 in response to the device ID request DREQ (step S71). Subsequently, the printer 10 judges whether the plug/unplug detecting flag is set (step S72). When the plug/unplug detecting flag has not been set (step S72: No), the printer 10 returns to step S60 mentioned above.

On the other hand, when the plug/unplug detecting flag has been set (step S72: Yes), the printer 10 clears the printing data PDAT remaining in the data buffer which is formed in the RAM 14 (step S73). Then, the printer 10 ejects the paper stopped in printing operation (step S74) and initializes the interface to prepare for the next printing (step S75). Then, the printer 10 returns to step S60 mentioned above.

As explained above, as in the case of the above-mentioned first embodiment, the printing system according to this embodiment can avoid doing an unnecessary print when the printer cable 50 is unplugged during a printing operation, even if the printer cable 50 is a parallel cable, an unplugging state of which is not able to be directly detected it unplugging.

In addition, in the printer 10 which has neither a power switch nor a control panel, the rest of the printing data PDAT can be cleared without unplugging and plugging again the power cord 24. Therefore, ease-of-use of the printer 10 can be improved.

Furthermore, since a reset operation can be performed even when the device ID request DREQ is received while a packet is being received, this reset operation can be performed even when the connector of the printer cable 50 is removed and then inserted at the timing other than the timing for printing.

### (Fifth Embodiment)

According to the fifth embodiment of the invention, the fourth embodiment is modified so that the printer judges whether the printer cable 50 is unplugged and plugged by not using the packet receiving flag but using only the monitoring effective flag.

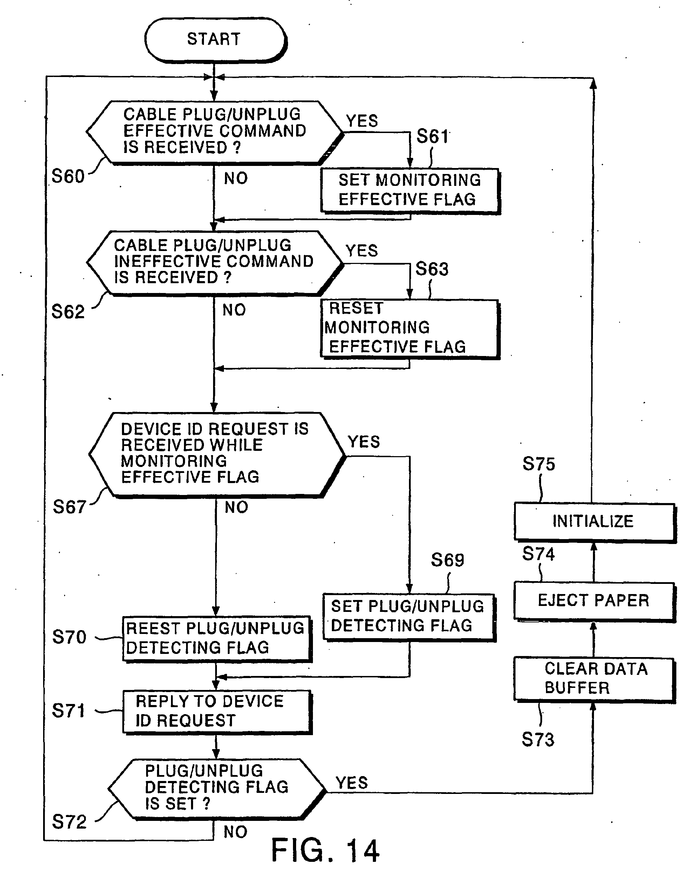

Fig. 14 is a flow chart for explaining plug/unplug detecting process in step S50 and a reset process in step S51 according to this embodiment. Fig. 14 corresponds to Fig. 13 in the fourth embodiment.

In this embodiment, plugging and unplugging of the printer cable 50 is managed by using only the monitoring effective flag. That is, the printer 10 sets the monitoring effective flag when the cable plug/unplug effective command is received from the computer 30 whereas the printer 10 resets the monitoring effective flag when the cable plug/unplug ineffective command is received from the computer 30. Then, when the printer 10 receives the device ID request DREQ while the monitoring effective flag is set, the printer 10 presumes that the printer cable 50 is unplugged and then plugged again during a printing operation and erases the rest of the printing data PDAT in RAM 14.

As a result, as shown in Fig. 14, in this embodiment, steps S64 to S66 and step S69 are omitted from the fourth embodiment (Fig. 13). Since this embodiment is similar to the above-mentioned fourth embodiment except this point, an explanation in detail is omitted.

As explained above, according to this embodiment, the printer 10 detects unplugging and plugging the cable by using only the monitoring effective flag, so that the printer 10 can monitor the unplugging and plugging of the printer cable 50 only while the computer 30 is transmitting the printing data PDAT to the printer 10. Therefore, it is possible to prevent the printer 10 from unnecessarily erasing the printing data PDAT stored in the RAM 14.

The invention is not limited to the embodiments explained above, but various changes or modifications are possible. For example, the invention can be applied to a printer having a power switch and/or a control panel. A connecting specification between the printer 10 and computer 30 is not limited to the parallel cable or the USB explained above, but other connecting specification can be employed.

Further, in the first and third embodiments, the magic string MS or the device ID request DREQ is a print start signal indicating a start of the transmission of the printing data PDAT, and the close channel CC is a print finish signal indicating a finish of the transmission of the printing data PDAT, but other signal can be employed.

In addition, in the fourth and fifth embodiments, the cable plug/unplug effective command is the print start signal, and the cable plug/unplug ineffective command is a print finish signal indicating a finish of the transmission of the printing data PDAT, but other signal can be employed. For example, the open command for printing data transfer channel is employed as the print start signal and the close command for printing data transfer channel is employed as the print finish signal.

Further, in the respective processing explained with the foregoing embodiments, the programs for executing these processing can be distributed in a form of a recording medium such as CD-ROM (compact disc read only memory), ROM or memory card, for example. In this case, once the printer 10 and/or the computer 30 read the programs from such a recording medium and execute the programs, the embodiment explained above can be realized.

In many cases, the printer 10 and/or the computer 30 have other programs such as operating system, other application programs, and so on. In these cases, the programs owned by the printer 10 and/or the computer 30 maybe efficiently used, and instructions for calling programs from the own programs of the printer 10 and/or the computer 30, which realize processing equivalent to the processing of the foregoing embodiments, may be recorded on the recording medium.

These programs may also be distributed as carrier waves through a network, instead of the form of a recording medium. The programs, transmitted as carrier waves through a network, are stored in the printer 10 and/or the computer 30 and can be executed to realize the foregoing embodiments.

In some cases, the program is encrypted and/or compressed when it is recorded on a recording medium or transmitted as carrier waves through a network. In these cases, the printer 10 and/or the computer 30, having read the program from the recording medium or carrier waves, has to decode and/or expand the programs before executing it.

As described above, according to the invention, the printer detects that the printer cable is unplugged and plugged again, and clears the printing data remaining in the data buffer, so that it is possible to prevent the printer from performing unnecessary printing.

## Claims

1. A printer (10) comprising:
a detector configured to detect that a printer cable (50), which is connected to a computer (30), is unplugged;
a data buffer (14) configured to temporarily store printing data received from the computer (30); and **characterized by**
a clearer configured to clear printing data stored in the data buffer (14) when the detector detects that the printer cable (50) has been unplugged.

2. The printer (10) according to claim 1, further comprising:
a print start detector configured to detect that a print start signal, which indicates a start of a transmission of printing data, is received from a computer (30);
a print finish detector configured to detect that a print finish signal, which indicates a finish of the transmission of the printing data, is received from the computer (30);
wherein the detector judges that the printer cable (50) has been unplugged when the print start signal is received again from the computer (30) or another computer (30) after the print start detector has detected the print start signal and before the print finish detector detects the print finish signal.

3. The printer (10) according to claim 2 wherein the print start signal is a device ID request which the computer (30) transmits for confirming a model of the printer (10).

4. The printer (10) according to claim 2 wherein the print start signal is a predetermined string which the computer (30) transmits before a start of the transmission of the printing data.

5. The printer (10) according to claim 2 wherein the print start signal is a cable plug/unplug effective command which the computer (30) transmits before a start of the transmission of the printing data, and the print finish signal is a cable plug/unplug ineffective command which the computer (30) transmits after a finish of the printing data.

6. The printer (10) according to claim 5 further comprising a packet receiving detector configured to detect that the printer (10) is receiving any packet, wherein
the clearer clears the printing data stored in the data buffer (14) if the packet receiving detector detects that the printer (10) is receiving the packet even when the print start signal is received.

7. The printing according to claim 6 wherein a plurality of logical channels are established between the computer (30) and the printer (10), and the cable plug/unplug effective command and the cable plug/unplug ineffective command are transmitted and received by using at least one of the logical channels.

8. The printer (10) according to claim 1, wherein the detector is a cable detector which directly detects whether the printer cable (50) is plugged normally or not.

9. The printer (10) according to claim 8 wherein the cable detector monitors a voltage of a power bus of the printer cable (50), judges that the printer cable (50) is unplugged when the voltage is not detected, and judges that the printer cable (50) is plugged when the voltage is detected.

10. The printer (10) according to claim 9 wherein the printer (10) performs a predetermined initialization when the cable detector detects that the printer cable (50) is plugged after the clearer has cleared the printing data stored in the data buffer (14).

11. The printer (10) according to claim 9 further comprising:
a print start detector configured to detect that a print start signal, which indicates a start of a transmission of the printing data, is received from the computer (30); and
a print finish detector configured to detect that a print finish signal, which indicates a finish of the transmission of the printing data, is received from the computer (30), wherein
the clearer clears the printing data stored in the data buffer (14) only when the cable detector detects that the printer cable (50) is unplugged after the print start detector has detected the print start signal, and before the print finish detector detects the print finish signal.

12. The printer (10) according to claim 11 wherein the print start signal is a device ID request which the computer (30) transmits for confirming a model of the printer (10).

13. The printer (10) according to claim 11 wherein the print start signal is a predetermined string which the computer (30) transmits before a start of the transmission of the printing data.

14. The printer (10) according to claim 2 wherein the printer (10) does not have a power switch for a user to turn ON/OFF a power supply and does not have a control panel for the user to operate for clearing the printing data stored in the data buffer (14).

15. A printer control method comprising:
a detecting process for detecting that a printer cable (50), which is connected to a computer (30), is unplugged; and
a clearing process for clearing printing data received from the computer (30) and stored in a data buffer (14) when it is detected that the printer cable (50) has been unplugged in the detecting process.

16. A computer program product for performing a printer control method, the method comprising:
a detecting step for detecting that a printer cable (50), which is connected to a computer (30), is unplugged; and **characterized by**
a clearing step for clearing printing data received from the computer (30) and stored in a data buffer (14) when it is detected that the printer cable (50) has been unplugged in the detecting step.

## Patentansprüche

1. Drucker (10) mit:
einem Detektor, der so ausgelegt ist, dass er erkennt, dass ein Druckerkabel (50), welches an einen Computer (30) angeschlossen ist, nicht an das Netz angeschlossen ist;
einem Datenpuffer (14), der so ausgelegt ist, dass er von dem Computer (30) empfangene Druckdaten temporär speichert, und **gekennzeichnet durch**
eine Löscheinrichtung, die dazu ausgelegt ist, in dem Datenpuffer (14) gespeicherte Druckdaten zu löschen, wenn der Detektor erkennt, dass das Druckerkabel (50) nicht an das Netz angeschlossen war.

2. Drucker (10) nach Anspruch 1, welcher weiterhin umfasst:
einen Druckstart-Detektor, der so ausgelegt ist, dass er erkennt, dass ein Druckstart-Signal, welches den Beginn einer Druckdatenübertragung angibt, von einem Computer (30) empfangen worden ist;
einen Druckende-Detektor, der so ausgelegt ist, dass er erkennt, dass ein Druckende-Signal, welches das Ende der Druckdatenübertragung angibt, von dem Computer (30) empfangen worden ist;
wobei der Detektor beurteilt, dass das Druckerkabel (50) nicht an das Netz angeschlossen war, wenn von dem Computer (30) oder einen anderen Computer (30) wieder das Druckstart-Signal empfangen wird, nachdem der Druckstart-Detektor das Druckstart-Signal erkannt hat und bevor der Druckende-Detektor das Druckende-Signal erkennt.

3. Drucker (10) nach Anspruch 2, wobei das Druckstart-Signal eine Anforderung für eine Vorrichtungs-ID ist, die der Computer (30) zur Bestätigung des Druckermodells (10) sendet.

4. Drucker (10) nach Anspruch 2, wobei das Druckstart-Signal ein vorgegebener String ist, welchen der Computer (30) vor dem Start der Übertragung der Druckdaten sendet.

5. Drucker (10) nach Anspruch 2, wobei das Druckstart-Signal ein Kabelanschluss-/-Nichtanschluss-wirksamer Befehl ist, den der Computer (30) vor Beginn einer Druckdatenübertragung sendet, und das Druckende-Signal ein Kabelanschluss-/-Nichtanschluss-unwirksamer Befehl ist, den der Computer (30) nach dem Ende der Druckdatenübertragung sendet.

6. Drucker (10) nach Anspruch 5, welcher weiterhin einen Paketempfangs-Detektor umfasst, der so ausgelegt ist, dass er erkennt, dass der Drucker (10) ein Paket empfängt, wobei
die Löscheinrichtung die Druckdaten löscht, die in dem Datenpuffer (14) gespeichert sind, wenn der Paketempfangsdetektor erkennt, dass der Drucker (10) das Paket selbst dann empfängt, wenn kein Druckstart-Signal empfangen worden ist.

7. Druckvorgang nach Anspruch 6, wobei eine Vielzahl logischer Kanäle zwischen dem Computer (30) und dem Drucker (10) hergestellt wird und der Kabelanschluss-/-Nichtanschluss-wirksame Befehl und der Kabelanschluss-/-Nichtanschluss-unwirksame Befehl durch Nutzung wenigstens eines der logischen Kanäle gesendet und empfangen werden.

8. Drucker (10) nach Anspruch 1, wobei der Detektor ein Kabeldetektor ist, der direkt erkennt, ob das Druckerkabel (50) normal angeschlossen ist oder nicht.

9. Drucker (10) nach Anspruch 8, wobei der Kabeldetektor die Spannung eines Strombusses des Druckkabels (50) überwacht und beurteilt, dass das Druckerkabel (50) nicht an das Netz angeschlossen ist, wenn keine Spannung erfasst wird, und beurteilt, dass das Druckerkabel (50) an das Netz angeschlossen ist, wenn eine Spannung erfasst wird.

10. Drucker (10) nach Anspruch 9, wobei der Drucker (10) eine vorher festgelegte Initialisierung ausführt, wenn der Kabeldetektor feststellt, dass das Druckerkabel (50) an das Netz angeschlossen ist, nachdem die Löscheinrichtung die im Datenpuffer (14) gespeicherten Druckdaten gelöscht hat.

11. Drucker (10) nach Anspruch 9, der weiterhin umfasst:
einen Druckstart-Detektor, der so ausgelegt ist, dass er erkennt, dass ein Druckstart-Signal, welches den Beginn einer Druckdatenübertragung angibt, von einem Computer (30) empfangen worden ist; und
einen Druckende-Detektor, der so ausgelegt ist, dass er erkennt, dass ein Druckende-Signal, welches das Ende der Druckdatenübertragung angibt, von dem Computer (30) empfangen worden ist;
wobei
die Löscheinrichtung die in dem Datenpuffer (14) gespeicherten Druckdaten nur dann löscht, wenn der Kabeldetektor erkennt, dass das Druckerkabel (50) nicht an das Netz angeschlossen ist, nachdem der Druckstart-Detektor das Druckstart-Signal erkannt hat und bevor der Druckende-Detektor das Druckende-Signal erkennt.

12. Drucker (10) nach Anspruch 11, wobei das Druckstart-Signal eine Anforderung für eine Vorrichtungs-ID ist, die der Computer (30) zur Bestätigung des Druckermodells (10) sendet.

13. Drucker (10) nach Anspruch 11, wobei das Druckstart-Signal ein vorgegebener String ist, welchen der Computer (30) vor dem Start der Übertragung der Druckdaten sendet.

14. Drucker (10) nach Anspruch 2, wobei der Drucker (10) keinen Stromschalter für den Benutzer zum Ein-/Ausschalten einer Stromversorgung und keine Bedienkonsole für den Benutzer aufweist, um die im Datenpuffer (14) gespeicherten Daten zu löschen.

15. Drucker-Steuerverfahren, welches umfasst:
einen Erkennungsprozess zum Erkennen, dass ein an einen Computer (30) angeschlossenes Druckerkabel (50) nicht an das Netz angeschlossen ist; und
einen Löschvorgang zum Löschen der Druckdaten, die von dem Computer (30) empfangen und in einem Datenpuffer (14) gespeichert werden, wenn festgestellt wird, dass das Druckerkabel (50) im Erkennungsvorgang vom Netz getrennt war.

16. Computerprogrammerzeugnis zum Ausführen eines Drucker-Steuerverfahrens, wobei das Verfahren umfasst:
einen Erkennungsschritt zum Erkennen, dass ein an einen Computer (30) angeschlossenes Druckerkabel (50) vom Netz getrennt ist, und **gekennzeichnet ist durch** einen Löschschritt zum Löschen der Druckdaten, die vom Computer (30) empfangen und in dem Datenpuffer (14) gespeichert worden sind, wenn festgestellt wird, dass das Druckerkabel (50) im Erkennungsschritt vom Netz getrennt war.

## Revendications

1. Imprimante (10) comprenant :
■ un détecteur configuré pour détecter qu'un câble d'imprimante (50), qui est connecté à un ordinateur (30), est débranché ;
■ une mémoire tampon de données (14) configurée pour stocker temporairement des données d'impression reçues de l'ordinateur (30) ; et **caractérisée par**
■ un système de libération configuré pour libérer des données d'impression stockées dans la mémoire tampon de données (14) lorsque le détecteur détecte que le câble d'imprimante (50) a été débranché.

2. Imprimante (10) selon la revendication 1, comprenant en outre :
■ un détecteur de démarrage d'impression configuré pour détecter qu'un signal de démarrage d'impression, qui indique le démarrage d'une transmission de données d'impression, est reçu d'un ordinateur (30) ;
■ un détecteur de fin d'impression configuré pour détecter qu'un signal de fin d'impression, qui indique la fin de la transmission des données d'impression, est reçu de l'ordinateur (30) ;
dans laquelle le détecteur juge que le câble d'imprimante (50) a été débranché lorsque le signal de démarrage d'impression est reçu à nouveau de l'ordinateur (30) ou d'un autre ordinateur (30) après que le détecteur de démarrage d'impression ait détecté le signal de démarrage d'impression et avant que le détecteur de fin d'impression détecte le signal de fin d'impression.

3. Imprimante (10) selon la revendication 2, dans laquelle le signal de démarrage d'impression est une demande d'identification d'un dispositif que l'ordinateur (30) transmet pour confirmer un modèle de l'imprimante (10).

4. Imprimante (10) selon la revendication 2, dans laquelle le signal de démarrage d'impression est une chaîne prédéterminée que l'ordinateur (30) transmet avant le démarrage d'une transmission de données d'impression.

5. Imprimante (10) selon la revendication 2, dans laquelle le signal de démarrage d'impression est une commande efficace de branchement/débranchement de câble que l'ordinateur (30) transmet avant le démarrage d'une transmission de données d'impressions, et le signal de fin d'impression est une commande inefficace de branchement/débranchement de câble que l'ordinateur (30) transmet après la fin des données d'impression.

6. Imprimante (10) selon la revendication 5, comprenant en outre un détecteur de réception de paquets configuré pour détecter que l'imprimante (10) ne reçoit aucun paquet, dans laquelle le système de libération libère les données d'impression stockées dans la mémoire tampon de données (14) si le détecteur de réception de paquets détecte que l'imprimante (10) reçoit le paquet même lorsque le signal de démarrage d'impression a été reçu.

7. Imprimante (10) selon la revendication 6, dans laquelle une pluralité de voies logiques sont établies entre l'ordinateur (30) et l'imprimante (10), et la commande efficace de branchement/débranchement de câble et la commande inefficace de branchement/débranchement de câble sont transmises et reçues en utilisant au moins l'une des voies logiques.

8. Imprimante (10) selon la revendication 1, dans laquelle le détecteur est un détecteur de câble qui détecte directement si le câble d'imprimante (50) est normalement branché ou non.

9. Imprimante (10) selon la revendication 8, dans laquelle le détecteur de câble surveille une tension d'un bus de puissance du câble d'imprimante (50), juge que le câble d'imprimante (50) est débranché lorsque la tension n'est pas détectée, et juge que le câble d'imprimante (50) est branché lorsque la tension est détectée.

10. Imprimante (10) selon la revendication 9, dans laquelle l'imprimante (10) exécute une initialisation prédéterminée lorsque le détecteur de câble détecte que le câble d'imprimante (50) est branché une fois que le système de libération a libéré les données d'impression stockées dans la mémoire tampon de données (14).

11. Imprimante (10) selon la revendication 9, comprenant en outre :
■ un détecteur de démarrage d'impression configuré pour détecter qu'un signal de démarrage d'impression, qui indique le démarrage d'une transmission de données d'impression, est reçu de l'ordinateur (30) ; et
■ un détecteur de fin d'impression configuré pour détecter qu'un signal de fin d'impression, qui indique la fin d'une transmission de données d'impression, est reçu de l'ordinateur (30) ; dans laquelle
■ le système de libération libère les données d'impression stockées dans la mémoire tampon de données (14) uniquement lorsque le détecteur de câble détecte que le câble d'imprimante (50) est débranché après que le détecteur de démarrage d'impression ait détecté le signal de démarrage d'impression, et avant que le détecteur de fin d'impression détecte le signal de fin d'impression.

12. Imprimante (10) selon la revendication 11, dans laquelle le signal de démarrage d'impression est une demande d'identification du dispositif que l'ordinateur (30) transmet pour confirmer un modèle de l'imprimante (10) .

13. Imprimante (10) selon la revendication 11, dans laquelle le signal de démarrage d'impression est une chaîne prédéterminée que l'ordinateur (30) transmet avant le démarrage d'une transmission de données d'impression.

14. Imprimante (10) selon la revendication 2, dans laquelle l'imprimante (10) n'a pas d'interrupteur pour qu'un utilisateur active/désactive une alimentation électrique et n'a pas de panneau de commande pour que l'utilisateur puisse effectuer la libération des données d'impression stockées dans la mémoire tampon de données (14).

15. Procédé de commande d'imprimante, comprenant :
■ un processus de détection servant à détecter qu'un câble d'imprimante (50), qui est connecté à un ordinateur (30), est débranché ; et
■ un processus de libération servant à libérer des données d'impression reçues de l'ordinateur (30) et stockées dans une mémoire tampon de données (14) lorsqu'il a été détecté que le câble d'imprimante (50) a été débranché dans le processus de détection.

16. Produit de programme informatique servant à exécuter un procédé de commande d'imprimante, le procédé comprenant :
■ une étape de détection servant à détecter qu'un câble d'imprimante (50), qui est connecté à un ordinateur (30), est débranché ; et **caractérisé par**
■ une étape de libération servant à libérer des données d'impression reçues de l'ordinateur (30) et stockées dans une mémoire tampon de données (14) lorsqu'il a été détecté que le câble d'imprimante (50) a été débranché dans le processus de détection.
